# EUROPÄISCHE PATENTSCHRIFT

(11) **EP 1 166 166 B1**
(45) Veröffentlichungstag und Bekanntmachung des Hinweises auf die Patenterteilung: **08.01.2003**
(21) Anmeldenummer: 00908888.1
(22) Anmeldetag: 17.03.2000
(51) Int. Cl.: G02B 27/14, G02B 27/28, H04N 9/31

(54) **SPEKTRALE LICHTAUFTEIL- UND REKOMBINATIONSANORDNUNG SOWIE VERFAHREN ZUR SPEKTRALSELEKTIVEN MODULATION VON LICHT**
SPECTRAL LIGHT SPLITTING AND RECOMBINATION DEVICE, AND METHOD FOR MODULATING LIGHT IN A SPECTRALLY SELECTIVE MANNER
DISPOSITIF DE DIVISION ET DE RECOMBINAISON SPECTRALES DE LA LUMIERE, ET PROCEDE DE MODULATION SPECTRALE SELECTIVE DE LA LUMIERE

(30) Priorität: 26.03.1999 CH 58699
(43) Veröffentlichungstag der Anmeldung: 02.01.2002
(73) Patentinhaber: Unaxis Balzers Aktiengesellschaft, 9496 Balzers (LI)
(72) Erfinder: HEINE, Claus, CH-7000 Chur (CH)
(74) Vertreter: Troesch Scheidegger Werner AG
(86) Internationale Anmeldenummer: CH0000151
(87) Internationale Veröffentlichungsnummer: WO00058772

(56) Entgegenhaltungen:
- EP-A- 0 364 043
- EP-A- 0 898 194
- WO-A-85/01590
- US-A- 2 958 258
- US-A- 5 073 830
- US-A- 5 820 241
- US-A- 5 828 489
- PATENT ABSTRACTS OF JAPAN vol. 096, no. 009, 30. September 1996 (1996-09-30) & JP 08 114705 A (N S D KK), 7. Mai 1996 (1996-05-07)

## Beschreibung

Die vorliegende Erfindung betrifft eine spektrale Lichtaufteil- und Rekombinationsanordnung nach dem Oberbegriff von Anspruch 1 sowie ein Verfahren zur spektralselektiven Modulation von Licht nach demjenigen von Anspruch 15.

Definitionen:
- • sichtbares Licht:: Licht mit Wellenlängen im Spektralbereich 380nm-720nm
- • rotes Licht:: Licht mit Wellenlängen im Spektralbereich 580nm-720nm, insbesondere im Spektralbereich 600nm-680nm.
- • grünes Licht:: Licht mit Wellenlängen im Spektralbereich 490nm-605nm, insbesondere im Spektralbereich 500nm-600nm.
- • blaues Licht:: Licht mit Wellenlängen im Spekralbereich 380nm-510nm, insbesondere im Spektralbereich 420nm-500nm.
- • gelbes Licht:: Licht mit Wellenlängen im Spektralbereich 475nm-605nm, insbesondere bei 482nm ± 3nm.
- • weisses Licht:: Licht mit rotem, blauem und grünem Licht-Anteil.
- • linear polarisiertes Licht:: Licht, dessen elektrischer Feldvektor in einer Ebene schwingt.
- • reflektives Lichtventil: Bildgebendes Element, welches in Reflexion, z.B. auf der Basis von Flüssigkristallen mit Polarisationsdrehung arbeitet (rLCD).
- • Hellzustand rLCD:: Bei Reflexion von Licht an Pixeln des reflektiven Lichtventils wird die Polarisation um ein ungeradzahliges Vielfaches von 90° gedreht.
- • Dunkelzustand rLCD:: Bei Reflexion von Licht an Pixeln des reflektiven Lichtventils wird die Polarisation beibehalten.
- • F-Zahl:: Grösse, welche die Winkelaufweitung einer Beleuchtungsoptik beschreibt. Sie ist gegeben durch den reziproken Wert der zweifachen numerischen Apertur NA, wobei NA = n sin α, und n der Brechungsindex des Mediums, α der halbe Oeffnungswinkel des Beleuchtungskonus ist. Je kleiner daher die F-Zahl, desto breiter der Oeffnungswinkel. Typische F-Zahlen liegen im Bereich von 5 bis 2.5, F-Zahlen mit 2, bis hinunter zu 1.4 werden ebenfalls eingesetzt.

Optische Lichtaufteil- und -Rekombinationsanordnungen werden hauptsächlich in Projektoren eingesetzt, um weisses Licht in rotes, grünes und blaues Licht aufzuteilen bzw. aus letzteren weisses Licht zu rekombinieren.

Dabei ist es bekannt, in Projektionsapparaten mittels einer solchen Anordnung weisses Licht in Licht der erwähnten drei Spektralbereiche aufzuteilen, es je über in Transmission arbeitende Lichtventile, wie insbesondere LCD-Lichtventile, bildgebend zu modulieren und dann das modulierte Licht der drei Spektren zu einem Abbildungsstrahl zu rekombinieren. Die Lichtventile, als bildgebende Bauelemente, bestehen aus einer Vielzahl einzeln ansteuerbarer Pixel. Ihre Anzahl ergibt dabei die Auflösung nach EVGA, SVGA, EGA, XGA, usw. Bei Einsatz von in Transmission arbeitenden Lichtventilen besteht wegen der Leiterbahnen und der Ansteuerungselektronik eine Begrenzung der Pixelgrösse nach unten, die nur schwer unterschritten werden kann. Bei Verkleinerung der Pixelgrösse sinkt zudem die optische Apertur pro Pixel.

Die vorliegende Erfindung betrifft hingegen ein Verfahren zur spektral selektiven Modulation von Licht mittels in Reflexion arbeitender Lichtventile. Die optische Lichtaufteil- und -Rekombinationsanordnung, worauf sich die Erfindung weiter bezieht, wird mithin bevorzugt in Kombination mit in Reflexion arbeitenden Lichtventilen eingesetzt, zur Bildung einer erfindungsgemässen Anordnung zur optischen Lichtaufteilung, spektralselektiver Modulation und anschliessender Rekombination. Bei Einsatz von in Reflexion arbeitenden Lichtventilen fallen die bezüglich in Transmission arbeitenden Lichtventile erläuterten Einschränkungen weg. In Reflexion arbeitende, gesteuerte Lichtventile drehen im Dunkelzustand eines Pixels die Polarisation des daran reflektierten Lichtes bezüglich derjenigen des einfallenden Lichtes nicht, während im Hellzustand die Polarisation des reflektierten Lichtes bezüglich der Polarisation des einfallenden Lichtes um 90° gedreht wird.

Bei einem Verfahren eingangs genannter Art bzw. einer optischen Lichtaufteil- und -Rekombinationsanordnung obgenannter Art muss einerseits gewährleistet sein, dass weisses Licht in Licht der erwähnten drei Spektren aufgeteilt wird, und Licht der erwähnten drei Spektren nach reflektiver Modulation und modulationsabhängiger bzw. ansteuerungsabhängiger Polarisationsdrehung zu weissem Licht rekombiniert wird, dabei andererseits Licht von Pixeln, die im Hellzustand betrieben werden, zu einem ersten Lichtstrahl - dem Abbildungsstrahl - rekombiniert werden sollte, Licht von Pixeln, die im Dunkelzustand betrieben werden, nicht am genannten Strahl austritt, dabei insbesondere zu einem zweiten Lichtstrahl - dem Dunkelreflexions-Strahl - rekombiniert werden sollte, wobei die beiden genannten Strahlen die Lichtaufteil- und Rekombinationsanordnung in unterschiedlichen Richtungen verlassen sollten. Ersterer wird dabei vorzugsweise und mit Blick auf den Einsatz an einer Projektionsanordnung, auf deren Abbildungsoptik geführt, letzterer sollte beispielsweise bzw. vorzugsweise zurück zur Weisslichtquelle geführt werden.

Bisher bekannte Lösungen, für Verfahren und für optische Lichtaufteil- und -Rekombinationsanordnungen obgenannter Art, lassen sich in Ansätze, welche Glasplatten einsetzen und Ansätze mit massiven Glaskörpern unterteilen. In beiden Fällen lassen sich wiederum Geometrien unterscheiden, die auf der Basis von 45°-Winkeln bzw. 90°-Strahlumlenkung arbeiten, und solche, die auf der Basis von Winkeln arbeiten, die von 45° bzw. 90°-Strahlumlenkung abweichen.

Mit 45°-Winkeln realisierte Anordnungen sind z.B. in der DE-40 33 842 beschrieben, welche ein quaderförmiges, aus Einzelprismen mit dichroitischen Schichten zusammengesetztes Bauelement beschreibt. Ueblicherweise wird ein solches Bauelement als X-Cube bezeichnet. Bezüglich solcher X-Cubes und ihrer Einsätze wird weiter verwiesen auf die US-A-2 737 076, US-A-2 754 718, JP-7-109443, US-A-5 098 183, EP-A-0 359 461 sowie die WO98/20383 derselben Anmelderin wie vorliegende Anmeldung.

Von 45° abweichende Winkel sowie massive Glaskörper werden beispielsweise gemäss der US-3 203 039 eingesetzt, welche zu Anordnungen führen, die gemeinhin als "Philips-Prismen" bekannt geworden sind.

Im weiteren sind unterschiedlichste Kombinationen aus dichroitischen Teileranordnungsplatten - spektralselektive Teiler - kombiniert mit Prismenanordnungen bekannt, so z.B. aus der US-3 945 034, oder kombiniert mit X-Cubes.

Für eine unter der Bezeichnung 3PBS-System bekannte Realisationsform kann auf R.L. Melcher "High information - Content Protection Display Based on Reflective LC on Silicon Light Valves", SID 98 Digest, pp 25-28, 1998, verwiesen werden.

Wie erwähnt wurde, muss bei der spektralen Lichtaufteilung und Rekombination nach der reflektiven Modulation Licht unterschiedlicher Polerisationszustände gehandhabt werden.

Eine X-Cube-Anordnung, gegebenenfalls in Kombination mit einer polarisationsselektiv strahlteilenden Anordnung, wie sie beispielsweise in der erwähnten WO98/20383 beschrieben ist, setzt dichroitische Schichtsysteme voraus, welche minimale Polarisationseffekte aufzeigen, weil sie von Licht unterschiedlicher Polarisation beaufschlagt werden, welches nur spektralselektiv behandelt werden sollte.

Diesbezüglich kann auf A. Thelen "Nonpolarising interference films inside a glass cube", Appl. Optics Vol. 15, Nr. 12, Dez., 1976, verwiesen werden.

Zu Problemen bezüglich der Dunkelzustands-Uebertragungscharakteristik von mit reflektiven Lichtventilen arbeitenden Lichtaufteil- und -Rekombinationstechniken kann auf A.E. Rosenbluth et al. "Contrast properties of reflective liquid crystal light valves in projection displays", IBM Journal of Research and Development, Vol. 42, Nr.3/4 May/July, pp 359-386, 1998, verwiesen werden. Ein Ausweg daraus ist nur mit erheblichem Design- und Herstellungsaufwand möglich.

Realisationen gemäss den obengenannten Philips-Prismen oder ähnlichen Ansätzen basieren in der Regel auf totaler interner Reflexion an einem oder mehreren Luftspalten. Neben den Schwierigkeiten in der Herstellung solcher Luftspalten ist dabei die Totalreflexion der begrenzende Faktor für die in der Praxis möglichen F-Zahlen. Ausserdem sind solche Systeme sehr empfindlich in bezug auf Restreflexionen, die z.B. bei nicht optimal angepassten Uebergängen von einem optischen Brechwert zum anderen auftreten können und unter verschiedensten Richtungen durch das System "geistern" können.

Bei Lösungsansätzen mit massiven Glaskörpern ist das Problem der Spannungsdoppelbrechung im Glas bzw. Substratmaterial zu berücksichtigen, wodurch die Polarisation des Lichtes unkontrollierbar stochastisch verteilt gedreht wird. Es entsteht dabei ein Kontrastverlust, der über die ausgeleuchtete Fläche nicht konstant ist.

Andererseits sind Bauteile, bei welchen dichroitische Platten im abbildenden Strahlengang eingesetzt werden, mit dem Problem behaftet, dass durch die Platten ein Astigmatismus hervorgerufen wird. Dem Uebergang zu dünneren Substraten, bei denen dieser Astigmatismus vernachlässigbar klein würde, ist durch die hohe Anforderung an die Planität solcher Substrate nach unten eine Grenze gesetzt.

Die vorliegende Erfindung setzt sich zur Aufgabe, eine Anordnung sowie ein Verfahren eingangs genannter Art vorzuschlagen, mittels welchen es möglich wird, im einen Ansteuerungszustand (Hellzustand) der Lichtventile das rekombinierte Licht mit maximaler Intensität in einem ersten Strahl zu kombinieren, während es an diesem Strahl dann mit minimaler Intensität austritt, wenn es von den Lichtventilen im anderen Ansteuerungszustand (Dunkelzustand) herrührt.

Im weiteren soll eine hohe Winkelakzeptanz realisiert werden, d.h. es sollen niedrige F-Zahlen möglich sein.

Diese Aufgabe wird durch die Anordnung bzw. das Verfahren eingangs genannter Art gelöst, die sich, entsprechend, gemäss dem Kennzeichen der Ansprüche 1 bzw. 15 auszeichnen.

Durch Einsetzen polarisationsselektiver Strahlaufteilung und -Rekombination wird es möglich, das rekombinierte Licht abhängig vom Ansteuerungs- bzw Modulationszustand der Lichtventile zu teilen, d.h. einen Abbildungsstrahl zu bilden aus Licht von Ventilen, die im einen Modulationszustand - dem Hellzustand - betrieben sind. An einem Projektionsapparat eingesetzt, ergibt sich damit einerseits, mit hoher Intensität, ein Abbildungsstrahl aus Licht, das an den Ventilen bzw. deren Pixel im Hellzustand reflektiert wird, andererseits bevorzugt ein weiterer Strahl von den Pixeln im Dunkelzustand reflektierten Lichtes. Letzterer wird bevorzugt der Beleuchtungsquelle rückgeführt.

Bevorzugte Ausführungsformen der Anordnung sowie des erwähnten Verfahrens sind in den entsprechenden abhängigen Ansprüchen 2 bis 10 bzw. 16 bis 27 spezifiziert. Eine bevorzugte erfindungsgemässe Verwendung ist in Anspruch 28 spezifiziert.

Im weiteren betrifft die vorliegende Erfindung eine Projektionsanordnung mit der erwähnten optischen Lichtaufteil- und - Rekombinationsanordnung gemäss den Ansprüchen 11 bis 14.

Die Erfindung wird anschliessend beispielsweise anhand von Figuren erläutert. Es zeigen:
- Fig. 1: schematisch eine erfindungsgemässe Anordnung zur Erläuterung des erfindungsgemässen Verfahrens,
- Fig. 2: schematisch eine nach dem Erfindungsverfahren arbeitende erste Ausführungsform der erfindungsge- mässen Anordnung,
- Fig. 3: detaillierter, eine erfindungsgemässe Anordnung, welche nach dem erfindungsgemässen Verfahren arbeitet, in bevorzugter Ausführungsform,
- Fig. 4: als Beispiel das Transmissionsverhalten eines bei erfindungsgemässem Vorgehen beispielsweise eingesetzten spektralselektiven Schichtsystems für s-polarisiertes und p-polarisiertes Licht,
- Fig. 5: das Transmissionsyerhalten eines polarisationsselektiven Schichtsystems, wie beispielsweise eingesetzt für s- bzw. p-polarisiertes Licht,
- Fig. 6: anhand einer Darstellung gemäss Fig. 2 den Strahlengang für grünes Licht bei erfindungsgemässem Vorgehen,
- Fig. 7: in Darstellung analog zu Fig. 6 den erfindungsgemäss realisierten Strahlengang für blaues Licht,

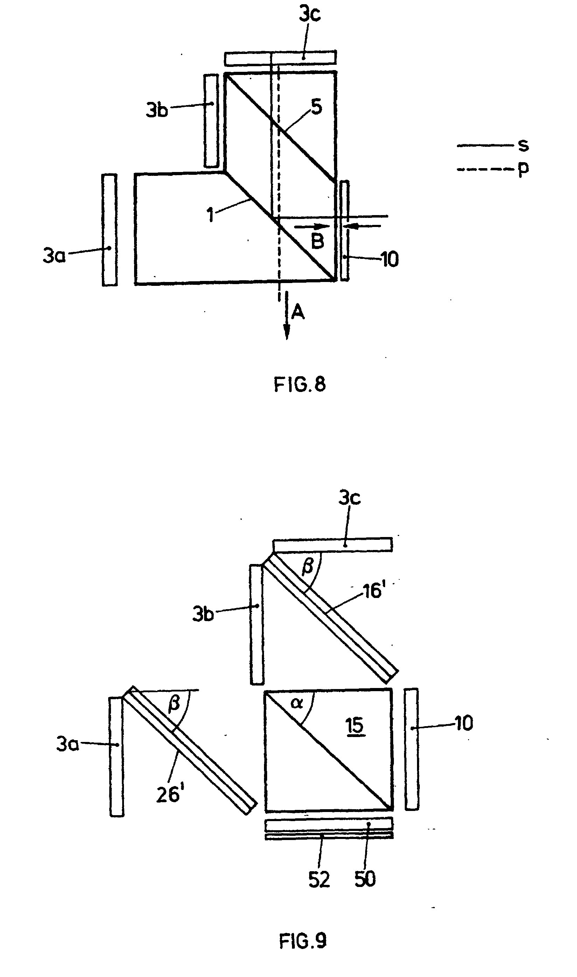

- Fig. 8: in Analogie zu den Darstellungen gemäss den Fig. 6 und 7 den erfindungsgemäss realisierten Strahlengang für rotes Licht,
- Fig. 9: eine weitere Ausführungsform einer erfindungsgemässen Anordnung, in teilweiser Plattenausführung,
- Fig. 10: eine weitere Ausführungsform der erfindungsgemässen Anordnung die von 45°-Winkeln bzw. 90°-Strahlumlenkung abweicht,
- Fig. 11: in Darstellung analog zu Fig. 10 dieselbe Ausführungsform bezüglich Abweichung von 45°-Winkeln, in teilweiser Plattenausführung.

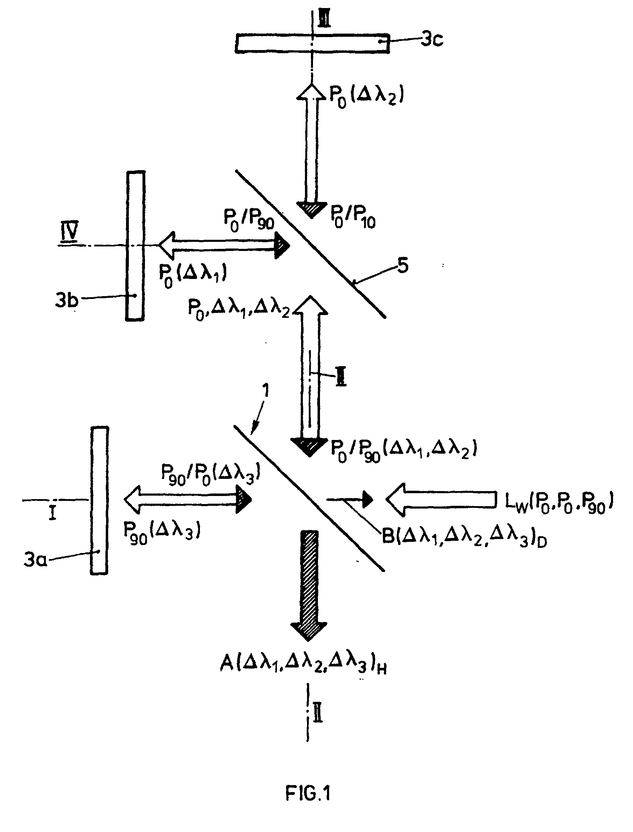

Anhand von Fig. 1 soll grundsätzlich Aufbau und Funktionsweise der erfindungsgemässen Anordnung bzw. des erfindungsgemässen Verfahrens erläutert werden.

Weisses Licht L_{W} wird mit spektralselektiver Polarisation, z.B. für rotes Licht (R) der Polarisation P₀, für blaues Licht (B), P₀, und, diesbezüglich um 90° gedreht, beispielsweise für grünes Licht (G), P₉₀, auf eine polarisationsselektive Teileranordnung 1 gelenkt. Die spektralselektive Polarisation in P₀, beispielsweise für rotes, Δλ₂, und blaues, Δλ₁, bzw. P₉₀ für grünes Licht, Δλ₃, wird durch ein zusätzliches, in Fig. 1 nicht dargestelltes vorgeschaltetes optisches Element erreicht, z.B. durch ein Folienlaminat, wie es in der US-5 751 384 beschrieben ist. Diesbezüglich wird diese Schrift als Beispiel für die Realisation spektralselektiver Polarisation, als integrierter Bestandteil der vorliegenden Beschreibung erklärt.

An der polarisationsselektiven Teileranordnung 1 wird Licht der Polarisation P₉₀ in eine erste Richtung I transmittiert, Licht der Polarisation P₀ in eine zweite Richtung II reflektiert.

Der polarisationsselektiven Teileranordnung 1 in erster Richtung I nachgeschaltet ist ein in Reflexion arbeitendes Lichtventil 3a vorgesehen.

In der zweiten Richtung II der polarisationsselektiven Teileranordnung 1 nachgeschaltet ist eine spektralselektive Teileranordnung 5 vorgesehen. Diese teilt das in zweiter Richtung II auftreffende Licht der beiden weiterhin mit P₀ polarisierten Spektren Δλ₁, Δλ₂ in eine dritte III und vierte Richtung IV auf, nun aber spektralselektiv wie mit Δλ₁, Δλ₂ dargestellt.

Unter einem weitesten Aspekt der vorliegenden Erfindung brauchen jeweils die dritten - III - und vierten - IV - Richtungen nicht parallel, entsprechend, zu den zweiten II und ersten Richtungen I zu sein. Es braucht nicht zwingend eine 45° basierte Anordnung der selektiven Teileranordnungen 1, 5 realisiert zu sein.

In den dritten III und vierten IV Richtungen der spektralselektiven Teileranordnung 5 nachgeschaltet, ist je ein in Reflexion arbeitendes Lichtventil 3b bzw. 3c vorgesehen.

Das nun sowohl polarisationsselektiv wie auch spektralselektiv aufgeteilte Licht L_{W} wird an den erwähnten, in Reflexion arbeitenden Lichtventilen 3 reflektiert.

Der Verlauf des reflektierten Lichtes ist in Fig. 1 mit ausgefüllten Pfeilspitzen bzw. Pfeilen dargestellt.

Von den beiden der spektralselektiven Teileranordnungen 5 nachgeschalteten Lichtventilen 3b und 3c wird das Licht in der Anordnung gemäss Fig. 1, entsprechend, in den dritten III und vierten IV Richtungen reflektiert. Dies aber, je nach Betriebszustand der erwähnten Lichtventile bzw. ihrer Pixel, weiterhin mit Polarisation P₀ - Dunkelzustand - bzw. auf Polarisation P₉₀ gedreht - Hellzustand.

Es tritt mithin aus zweiter Richtung auf die polarisationsselektive Teileranordnung 1 Licht der beiden Spektralbereiche Δλ₁ und Δλ₂, an der spektralselektiven Teileranordnung 5 rekombiniert, auf, aber je nach Betriebszustand der erwähnten Lichtventilpixel, mit der Polarisation P₀ bzw. P₉₀ und dies Spektrum-unabhängig.

Analog wird das auf Lichtventil 3a auftreffende Licht des Spektralbereiches Δλ₃ je nach Betriebszustand deren Pixel weiterhin in Polarisation P₉₀ bzw. mit Polarisation P₀ in erste Richtung I reflektiert und trifft auf die polarisationsselektive Teileranordnung 1 auf. Das Licht der drei Spektren Δλ₁, Δλ₂, Δλ₃ wird an der polarisationsselektiven Teileranordnung 1 polarisationsselektiv rekombiniert:
- Licht des Spektralbereiches Δλ₃, im Hellzustand der Pixel des Lichtventils 3a auf die Polarisation P₀ weitergedreht, tritt aufgrund der Wirkung der polarisationsselektiven Teileranordnung 1, in Analogie zu ihrer Wirkung auf einfallendes Licht, in zweiter Richtung II aus.
- Licht der beiden Spektralbereiche Δλ₁ und Δλ₂ tritt aus zweiter Richtung auf die polarisationsselektive Teileranordnung 1 auf, im Hellzustand der entsprechenden Pixel an den Lichtventilen 3b und 3c in Polarisation P₉₀ gedreht, und propagiert in zweiter Richtung II weiter: Es wird ein Abbildungsstrahl A gebildet, in der erwähnten zweiten Richtung II mit Licht der drei Spektren, moduliert durch die zugeordneten Lichtventilpixel im Hellzustand H.
- Licht des Spektralbereiches Δλ₃ in erster Richtung I, also reflektiert vom Lichtventil 3a, bei Dunkelbetriebszustand der zugeordneten Pixel, tritt mit unveränderter Polarisation P₉₀ auf die polarisationsselektive Teileranordnung 1 auf und tritt in erster Richtung I aus.
- Licht aus zweiter Richtung II mit der Polarisation P₉₀, wie sie durch den Dunkelzustand der zugeordneten Pixel an den Lichtventilen 3b und 3c erzeugt wird, tritt ebenfalls in erster Richtung I aus der polarisationsselektiven Anordnung 1 aus: Es wird ein zweiter Strahl B mit Licht der drei Spektren gebildet, reflektiert an den Lichtventilen bei Ansteuerung der zugeordneten Pixel in den Dunkelzustand D.

Gemäss Fig. 1 bilden die Anordnungen 1 und 5, bezüglich Lichteingang und den spektralen Ausgängen zu den Lichtventilen, als Blackbox betrachtet, eine spektralselektive Aufteil- und Rekombinations-Einheit.

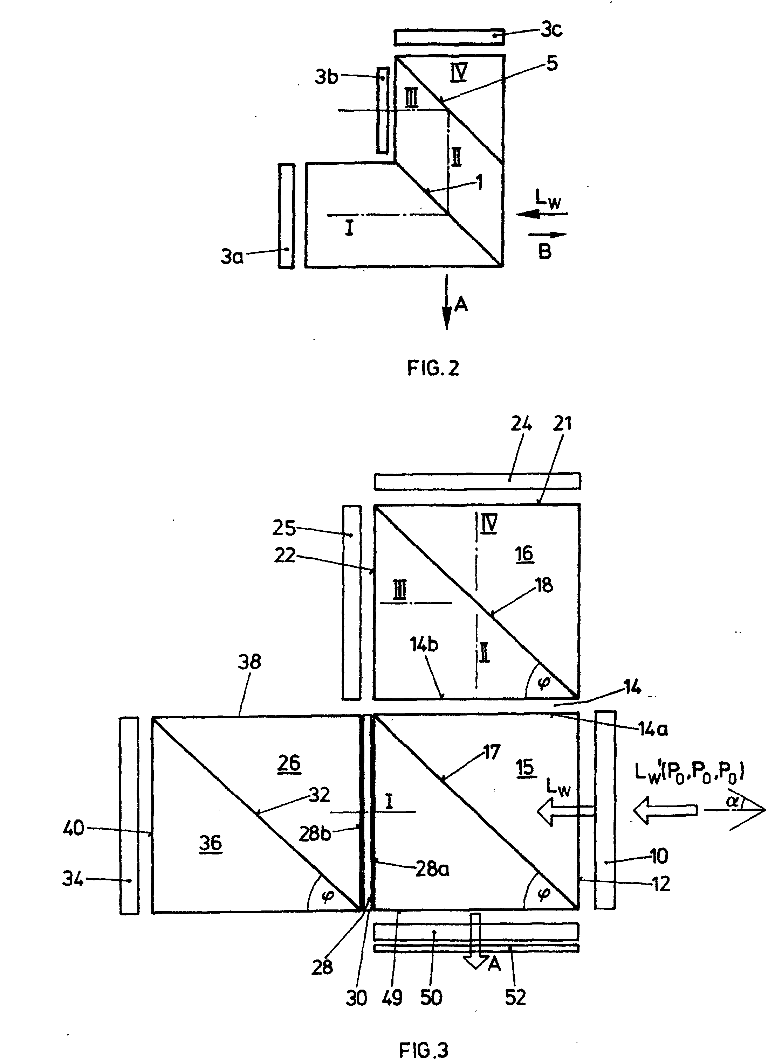

In Fig. 2 ist der prinzipielle Aufbau der gemäss Fig. 1 arbeitenden Anordnung dargestellt, wobei auch hier, wie bevorzugt, paarweise Parallelität der vier Richtungen I - IV realisiert ist. Im übrigen sind für die bereits anhand von Fig. 1 erläuterten Bauteile in Fig. 2 dieselben Bezugszeichen gewählt.

In Fig. 3 ist eine bevorzugte Ausführungsform einer nach dem erfindungsgemässen Verfahren arbeitenden erfindungsgemässen Lichtaufteil- und -Rekombinationsanordnung dargestellt, zusammen mit den vorzugsweise mit der Anordnung kombinierten Lichtventilen sowie von weiteren Teilen, wie sie bei Realisation einer erfindungsgemässen Projektionsanordnung vorzugsweise vorgesehen sind.

Das einfallende weisse Licht L'_{W} ist unter P₀ polarisiert. Die Erzeugung solchen Lichtes mittels Polarisatoren und/oder Polarisations-Konvertierungs-Systemen ist allgemein bekannt.

Ein spektralselektiver Polarisationsrotator 10 hat nun die Aufgabe, die Polarisation eines Spektralbereiches des sichtbaren Lichtes L_{W} gegenüber den anderen beiden um 90°, P₉₀, zu drehen. Der Rotator kann z.B. aus einem Laminat von doppelbrechenden Folien bestehen, wie es, wie erwähnt in der US-5 751 384 beschrieben wird. Damit ist das Weisslicht L_{W} gemäss Fig. 1 bereitgestellt.

L_{W} fällt auf die Eintrittsfläche 12 der erfindungsgemässen Anordnung auf, bevorzugt im wesentlichen senkrecht, wie dargestellt. Je nach dem, ob der Polarisationsrotator 10 direkt auf die Fläche 12 aufgebracht ist oder nicht, bedarf es eines entsprechenden Brechungsindex-Anpassungsschichtsystems bzw. eines Antireflexions-Schichtsystems (nicht dargestellt) am Rotator 10 und/oder an der Fläche 12.

Das Licht L_{W} durchläuft das Substratmaterial der vorzugsweise gemäss Fig. 3 im Querschnitt quadratischen polarisationsselektiven Teileranordnung 15. Als Substratmaterial wird - vorzugsweise für beide Teilkörper beidseits einer Diagonalfläche F gleiches Material - bevorzugt Glas - eingesetzt. Der Brechungsindex des Substratmateriales auf beiden Seiten der Fläche F sollte möglichst gleich sein. Die optischen Eigenschaften des Substratmaterials bestimmen die spektrale Charakteristik der polarisationsselektiven Teileranordnung 15 mit. Wesentlich ist weiter, dass das Material wenig Licht absorbiert, insbesondere im blauen Spektralbereich Δλ_{B}. Einfach wird das optische Design des polarisationsselektiven Schichtsystems 17 in der Fläche F, wenn der Brechungsindex des Substratmaterials hoch ist. Geeignet ist deshalb beispielsweise SF2-Material mit einem Brechungsindex von n = 1,65. Zu berücksichtigen sind auch die Doppelbrechungseigenschaften des Substratmateriales.

Licht L_{W} der einen Polarisation P₀, die bezüglich der Teileranordnung 15 auch als s-Polarisation bezeichnet wird, sollte am Schichtsystem 17 möglichst vollständig reflektiert werden, während Licht der anderen Polarisation P₉₀, die bezüglich der Teileranordnung 15 auch als p-Polarisation bezeichnet wird, daran möglichst vollständig transmittiert werden sollte. Wesentlich ist weiter eine weite Winkelakzeptanz, soll die erfindungsgemässe Anordnung, wie bevorzugt, auch für divergente Weisslicht-Beleuchtungsanordnungen eingesetzt werden. Diese weisen typischerweise einen Oeffnungswinkel von α = ± 12° oder mehr auf. Wird beispielsweise ein bekannter MacNeille-Polarisator eingesetzt (siehe z.B. H.A. MacLeod "Thin Film Optical Filters", 2^{nd} Edition, pp. 328-332, Adam Hilger, 1986), so ist die Winkelabhängigkeit für Reflexion in s-Polarisation kein Problem, während die p-Transmission eine starke Winkelabhängigkeit aufzeigt. Es ergibt sich bei einem Beleuchtungsöffnungswinkel α in obengenannter Grössenordnung typischerweise ein Verlust von ca. 15% in dieser Transmission.

Es tritt von L_{W} der Spektralbereich Δλ_{R} und Δλ_{B} in s-Polarisation auf das Schichtsystem 17 und wird daran vollständig reflektiert, in die zweite Richtung II. Der dritte Spektralbereich Δλ_{G} in p-Polarisation wird in erster Richtung I transmittiert. Es findet mithin, wie bereits erläutert wurde, durch Kombination des spektralselektiven Polarisationsrotators 10, sowie des polarisationsselektiven Teilers 15 eine Spektralbereichtrennung aufgrund des Polarisierungs-Kriteriums statt. Dabei ist zu bemerken, dass der Polarisationsrotator 10 im wesentlichen keine Winkelabhängigkeit zeigt und dass der polarisationsselektive Teiler 15 so optimiert werden kann, dass er kaum Wellenlängenabhängigkeit zeigt. Damit wird erzielt, dass das System im wesentlichen keine unerwünschten, auf Winkelabhängigkeiten zurückzuführende Färbungseffekte aufzeigt.

In Richtung II propagierendes Licht der Spektralbereiche Δλ_{B} und Δλ_{R} tritt in einen spektralselektiven Teiler 16 ein. Soll die erfindungsgemässe Anordnung modular aufgebaut werden, so handelt es sich bei den Quadern der Anordnungen 15 und 16 je um separate Teile und es resultiert jedenfalls eine Grenzfläche 14. Es ist aber durchaus möglich, die Anordnungen 15, 16 ohne Grenzfläche 14 einteilig zu realisieren. Ist an der Grenzfläche 14 ein Luftspalt vorgesehen, so ist es von Vorteil, an der einen und/oder anderen der Flächen 14a, 14b eine Antireflexbeschichtung vorzusehen.

Bei direkter, luftspaltfreier Kontaktierung der Anordnungen 15, 16 kann eine Zwischenschicht zur Anpassung der Brechungsindizes der beiden Materialien an der einen und/oder anderen Fläche 14a, 14b von Vorteil sein.

Das dichroitische bzw. spektralselektive Schichtsystem 18 der spektralselektiven Teileranordnung 16 wird, wie dargestellt, wiederum bevorzugt mit einer 45°-Prismengeometrie ausgelegt. Da hier ein möglichst polarisationsunabhängiges Teilersystem benötigt wird, wird bevorzugt ein Substratmaterial eingesetzt mit niedrigem Brechungsindex. Damit wird bevorzugt das Substratmaterial der Teileranordnungen 16 und 15 unterschiedlich gewählt, und es sind die vorerwähnten Antireflex- und Indexanpassungsmassnahmen an der Grenzfläche 14 zu treffen. Bevorzugt wird als Substratmaterial für Teiler 16 BK7 mit einem Brechungsindex n = 1,52 eingesetzt, wobei wiederum einer niedrigen Spannungsdoppelbrechung Beachtung zu schenken ist.

Dabei wird, nicht zwingend, aber bevorzugt, beidseits des Schichtsystems 18 das gleiche Substratmaterial eingesetzt. Bezüglich des dichroitischen Farbteilerschichtsystems 18 ist es wesentlich, dass die Transmissions- und Reflexionscharakteristika für die verbleibenden zwei Spektralbereiche Δλ_{B} und Δλ_{R} im wesentlichen polarisationsunabhängig sind. Weil für den grünen Spektralbereich, Δλ_{G}, Realisation von Polarisationsunabhängigkeit und Winkelunabhängigkeit weit kritischer ist als für den Blaubereich Δλ_{B} und den Rotbereich Δλ_{R}, ist ersichtlich, warum bevorzugt der spektralselektiven Teileranordnung 16 die letzterwähnten Spektralbereiche zugeführt werden.

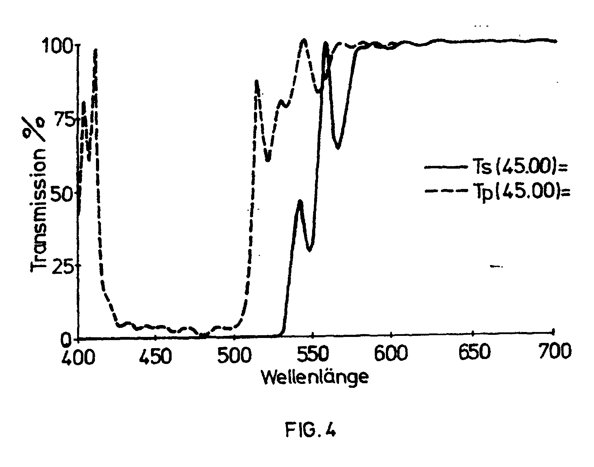

In Fig. 4 ist das Transmissionsverhalten eines beispielsweise eingesetzten dichroitischen Schichtsystems 18 in BK7-Substratmaterial für Einfallswinkel von 45° sowohl für die s- wie auch für die p-Polarisation dargestellt.

Das spektralselektive Schichtsystem 18 war entsprechend der zu erwirkenden Charakteristik als Langpassfilter, als optisches Vielschichtsystem mit 67 Schichten, abwechselnd aus hoch- und niedrig-brechenden Materialien (TiO₂, Y₂O₃) hergestellt. Andere für diesen Filtertyp geeignete Materialien und Schichtabfolgen sind in bekannter Weise möglich.

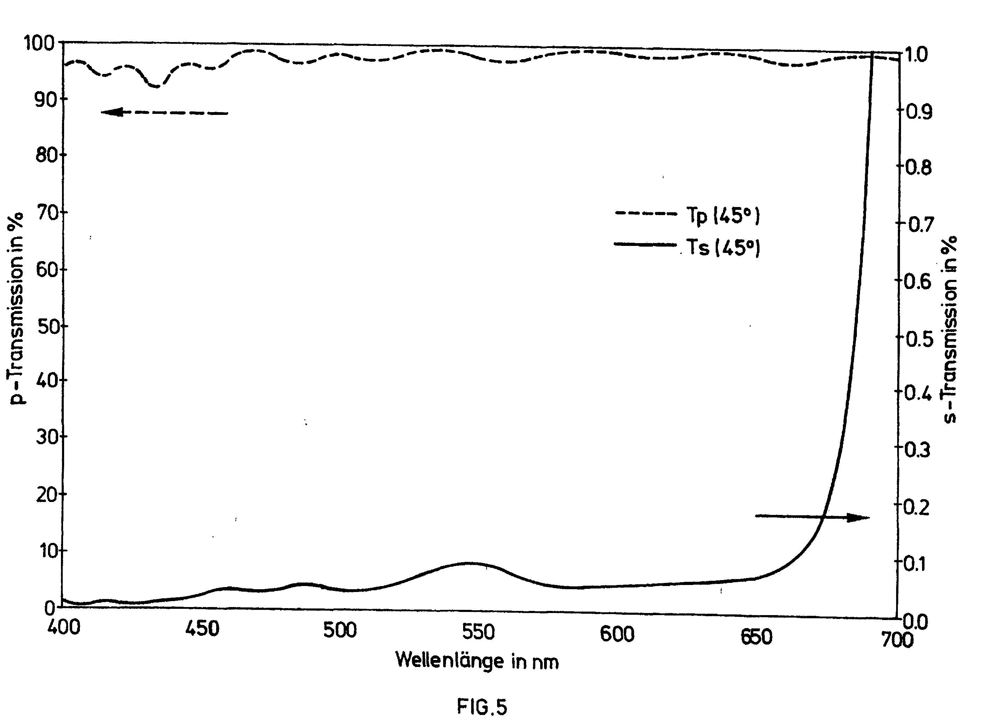

In Fig. 5 ist das Transmissionsverhalten eines polarisationsselektiven Schichtsystems 17 dargestellt, für p- und s-polarisiertes weisses Licht. Das Schichtsystem wurde dabei als typischer MacNeille-Polarisator ausgeführt, bestehend aus 45 optischen Wechselschichten aus SiO₂/Ta₂O₅. Selbstverständlich sind auch hier andere Schichtabfolgen und/oder Materialien möglich.

Die Austrittsflächen 20 bzw. 22 der spektralselektiven Teileranordnung 16, für die entsprechenden Spektralbereiche Δλ_{R} und Δλ_{B}, können gegebenenfalls mit einer Antireflexbeschichtung versehen sein. Sind auf diesen Flächen weitere optische Elemente direkt aufgekittet, wie die Lichtventile 25 und 24, so werden bevorzugt Schichtsysteme zur Brechungsindexanpassung eingebaut.

Rückblickend auf die Wirkung der polarisationsselektiven Teileranordnung 15, propagiert Licht in p-Polarisation in Richtung I. Bevorzugterweise wird nun zusätzlich zu den Erläuterungen nach Fig. 1 und 2 gemäss Fig. 3 bevorzugt ein Ausgleichskörper 26 vorgesehen. Ist nun die in Fig. 3 dargestellte Anordnung mit den Teilen 15, 16 und 26 modular aufgebaut, so ergibt sich eine Grenzfläche 28 zwischen Teiler 15 und Ausgleichskörper 26. Dies insbesondere dann, wenn die Materialien des Substrates des Teilers 15 vom Material des Körpers 26 unterschiedlich sind. Ist im Grenzflächenbereich 28 ein Luftspalt vorgesehen, so ist es von Vorteil, an der einen und/oder anderen der diesen Luftspalt begrenzenden Fläche 28a und/oder 28b ein Antireflexschichtsystem vorzusehen. Ist der Uebertritt luftspaltfrei realisiert, kann es vorteilhaft sein, je nach Wahl der aneinandergrenzenden Substratmaterialien, eine Brechungsindexanpassung vorzunehmen.

Der Ausgleichskörper 26 wird insbesondere bevorzugt vorgesehen, um, wie noch zu beschreiben sein wird, eine Farbtrimmung vorzunehmen. Hierzu wird weiter vorteilhafterweise zwischen den Flächen 28a und 28b eine sogenannte Halfwave-Retarder-Platte 30 eingebaut, womit die Polarisation des Lichtes im spektralen Bereich Δλ_{G} gedreht werden kann.

Wird eine solche Halfwave-Retarder-Platte 30 mit bzw. ohne Luftspalten eingesetzt, so wird bevorzugt, wiederum an den Grenzflächen 28a und/oder 28b und/oder den entsprechenden Flächen der Retarder-Platte 30, ein Brechwertanpass-Schichtsystem vorgesehen bzw. ein Antireflexsystem.

Nebst der Möglichkeit, am Ausgleichskörper 26 eine Farbtrimmung vorzusehen, wird mit ihm der optische Weg des darin propagierenden Lichtes Δλ_{G} demjenigen des Lichtes der beiden anderen Spektralbereiche Δλ_{B} und Δλ_{R} angepasst. Beidseits des noch zu beschreibenden Schichtsystems 32, bevorzugt in der 45°-Diagonalfläche des Körpers 26, ist das Substratmaterial vorzugsweise gleich und, weiter bevorzugt, gleich demjenigen der Teileranordnung 15.

Das bevorzugt in der 45°-Diagonalfläche des Ausgleichskörpers 26 vorgesehene Farbtrimmschichtsystem 32 reflektiert selektiv Spektralbereiche des Lichtes aus dem optischen Pfad, Richtung I, weg. Damit handelt es sich beim Ausgleichskörper 28 auch um eine spektralselektive Teileranordnung. Ist keine Halfwave-Retarder-Platte 30 vorgesehen, so trifft das Licht Δλ_{G} zunächst in p-Polarisation auf das System 32, und wird typischerweise transmittieren. Kommt das Licht Δλ_{G}, im Hellzustand nachgeschalteter Lichtventil-Pixel, in s-Polarisation zurück, so kann das Schichtsystem 32 sehr gut als Trimmfilter funktionieren, es beeinflusst die spektrale Charakteristik im Hellzustand, während diese im Dunkelzustand der Pixel im wesentlichen nicht beeinflusst wird, bleibt ja dann das Licht Δλ_{G} p-polarisiert. Das vom System 32 wegreflektierte Licht vorgegebener, ungewollter Spektralbereiche tritt beispielsweise durch eine Fläche 36 aus dem System bzw. dem Ausgleichskörper 26 aus.

Eine Möglichkeit, das Verhalten des Systems auch für den Dunkelzustand der Pixel zu trimmen, besteht in kombiniertem Einsatz des Schichtsystems 32 und der Retarder-Platte 30. Wird mittels der Retarder-Platte 30 das vorerst p-polarisierte Licht von der polarisationsselektiven Teileranordnung 15 in s-Polarisation gedreht, so kann eine Farbtrimmung schon auf dem Weg hin zum Lichtventil 34 erfolgen. Das dann am Schichtsystem 32 wegreflektierte Licht verlässt das System an der Austrittsfläche 38. Weil im Dunkelzustand der Pixel keine Polarisationsänderung des reflektierten Lichtes Δλ_{G} erfolgt, tritt auf dem Rückweg reflektiertes Licht wiederum s-polarisiert ein zweites mal auf das Schichtsystem 32 auf, und wird ein zweites mal getrimmt, indem unerwünschte Spektralanteile über die Fläche 36 wegreflektiert wurden. Dies ergibt eine Verbesserung im Dunkelzustand und damit eine Verbesserung des realisierten Bildkontrastes.

Wie bereits für andere Grenzflächen beschrieben, wird auch an der Austrittsfläche 40, je nachdem, ob ein Luftspalt zum nachgeschalteten Lichtventil 34 vorgesehen ist oder nicht, sowie der sich dort stossenden Materialien, ein Antireflexbeschichtungs- und/oder ein Schichtsystem zur Anpassung der Brechungsindizes bevorzugt eingebaut. Dies gilt auch an den Austrittsflächen 38 sowie 36 in Abhängigkeit vom Aufbau eines Gesamtsystems in der Praxis.

Eine weitere Verbesserung der Uebertragungseigenschaften kann gegebenenfalls durch Vorsehen eines weiteren spektralselektiven Polarisationsrotators 50 in Kombination mit einem Analysator 52 vorgesehen sein.

Ueber die Austrittsfläche 49 ausgebildet mit oder ohne Luftspalt und entsprechend bevorzugt mit Antireflex- und/oder Brechungsindex-Anpassschichtsystemen, tritt der Abbildungsstrahl A gemäss Fig. 2 aus. Tritt gegebenenfalls Licht von im Dunkelzustand geschalteten Pixeln im Abbildungsstrahl A aus, so kann dessen Anteil mit dem erwähnten spektralselektiven Polarisationsrotator 50 und dem nachgeschalteten Analysator 52 minimalisiert werden.

Licht des Spektralbereiches Δλ_{R} und Δλ_{B}, welches, entsprechend, von den Lichtventilen 24 bzw. 25 im Pixel-Hellzustand zum Abbildungsstrahl A kombiniert wird, ist bezüglich des polarisationsselektiven Schichtsystems 17 p-polarisiert. Hingegen ist Licht Δλ_{G}, welches vom Lichtventil 34 im Pixel-Hellzustand reflektiert wird und zum Abbildungsstrahl A rekombiniert wird, dort s-polarisiert. Am polarisationsselektiven Schichtsystem 17, bzw. generell an der polarisationsselektiven Teileranordnung 15, wird ein Teil, typischerweise ca. 10%, des im Dunkelzustand der Pixel einfallenden Lichtes in den Abbildungsstrahl A mitreflektiert. Mit Hilfe des spektralselektiven Polarisationsrotator-Elementes 50 kann dieser Anteil zu s-polarisiertem Licht umpolarisiert werden, wobei dann alle Bestandteile des bei Pixel-Hellzustand reflektierten Lichtes p-polarisiert sind, indem das Wirkungssprektrum dieses Rotators in den Spektralbereich Δλ_{G} gelegt wird. Alle Anteile des fälschlicherweise im Pixel-Dunkelzustand reflektierten Lichtes im Abbildungsstrahl A sind dann s-polarisiert. Danach ist es einfach; mit Hilfe des Analysators 52 den vom Dunkelzustand bewirkten Anteil im Gesamtspektrum auszublocken.

Der Analysator 52 kann dabei aus einer Polarisationsfolie bestehen.

Anschliessend soll zusammenfassend noch einmal der Strahlengang der einzelnen Spektralbereiche dargelegt werden. Dabei wird aus Uebersichtsgründen und der bevorzugten Ausführungsform folgend, gemäss Fig. 1 Δλ₁ als blaues Licht B, Δλ₂ als rotes Licht R und Δλ₃ als grünes Licht G bezeichnet.

Die Beschreibung erfolgt anhand der Darstellung gemäss Fig. 2.

### Strahlengang G:

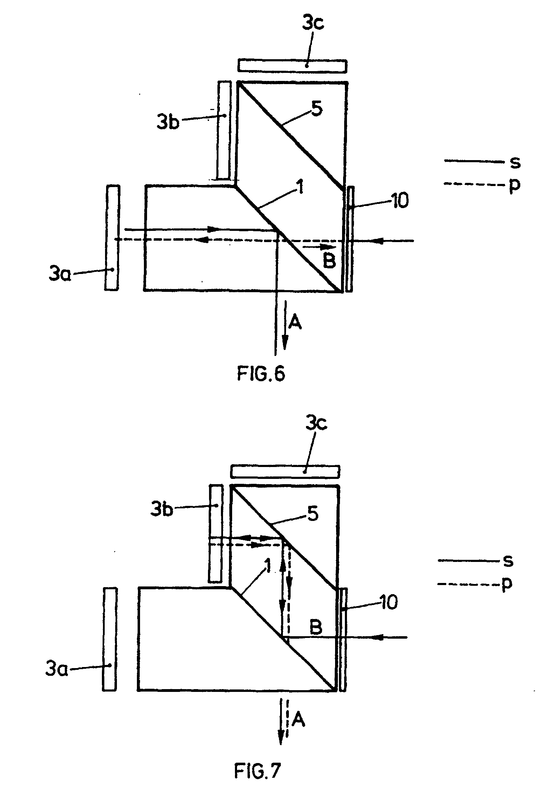

Es fällt weisses Licht, mit Bezug auf die polarisationsselektive Teileranordnung 1, s-polarisiert auf den Grünrotator 10. s-Polarisation ist in Fig. 6 wie auch in den nachfolgenden Figuren mit ausgezogenem Strahlengang dargestellt.

G verlässt den Rotator 10 p-polarisiert (gestrichelt). Damit wird G am polarisationsselektiven Teiler 1 transmittiert und fällt auf die Lichtventilanordnung 3a.

Im Hellzustand seiner Pixel wird die Polarisation des reflektierten G gedreht in s-Polarisation. An der polarisationsselektiven Anordnung 1 wird das s-polarisierte G in Richtung Abbildungsoptik, d.h. als spektraler Teil des Abbildungsstrahls A, ausgegeben. Im Dunkelzustand der Pixel wird die Polarisation des reflektierten Lichtes G bezüglich derjenigen des einfallenden nicht verändert. Damit wird dann G in p-Polarisation reflektiert und fällt auf die polarisationsselektive Teileranordnung 1, wo es als Teil des Strahles B zurück zur Beleuchtungsoptik transmittiert wird.

### Strahlengang B:

B wird am spektralselektiven Rotator 10 bezüglich seiner Polarisation nicht verändert und fällt somit s-polarisiert auf die polarisationsselektive Teileranordnung 1. Gemäss seiner Polarisation wird B dort reflektiert und trifft, weiterhin s-polarisiert, auf die spektralselektive Teileranordnung 5, wo es gemäss seinem Spektralbereich reflektiert und, weiterhin s-polarisiert, auf die Lichtventilanordnung 3b trifft.

Im Hellzustand der Pixel erfolgt eine Polarisationsdrehung, B wird p-polarisiert auf die spektralselektive Teileranordnung 5 zurückgeworfen, wo es gemäss seinem Spektralbereich reflektiert wird. B trifft, weiterhin p-polarisiert, auf die polarisationsselektive Teileranordnung 1, wo es als Spektralanteil B des Abbildungsstrahls A in Richtung Abbildungsoptik transmittiert wird.

Im Dunkelzustand der Pixel erfolgt keine Polarisationsdrehung, B wird weiterhin in s-polarisiert auf die spektralselektive Teileranordnung 5 zurückgeworfen, wo es gemäss seinem Spektralbereich reflektiert wird. B trifft, weiterhin s-polarisiert, auf die polarisationsselektive Teileranordnung 1, wo es als Spektralanteil B des Strahls B in Richtung Beleuchtungsoptik reflektiert wird.

### Strahlengang R:

R wird am spektralselektiven Rotator 10 bezüglich seiner Polarisation nicht verändert und fällt somit s-polarisiert auf die polarisationsselektive Teileranordnung 1. Gemäss seiner Polarisation wird R dort reflektiert und trifft, weiterhin s-polarisiert, auf die spektralselektive Teileranordnung 5, wo es gemäss seinem Spektralbereich transmittiert und, weiterhin s-polarisiert, auf die Lichtventilanordnung 3c trifft.

Im Hellzustand der Pixel erfolgt eine Polarisationsdrehung, R wird p-polarisiert auf die spektralselektive Teileranordnung 5 zurückgeworfen, wo es gemäss seinem Spektralbereich transmittiert wird. R trifft, weiterhin p-polarisiert, auf die polarisationsselektive Teileranordnung 1, wo es als Spektralanteil R des Abbildungsstrahls A in Richtung Abbildungsoptik transmittiert wird.

Im Dunkelzustand der Pixel erfolgt keine Polarisationsdrehung. R wird weiterhin s-polarisiert auf die spektralselektive Teileranordnung 5 zurückgeworfen, wo es gemäss seinem Spektralbereich transmittiert wird. R trifft, weiterhin s-polarisiert, auf die polarisationsselektive Teileranordnung 1, wo es als Spektralanteil R des Strahls B in Richtung Beleuchtungsoptik reflektiert wird.

Die dargestellte Ausführungsform wird üblicherweise als Grün-, bzw. Δλ₃-Standalone-Version bezeichnet. Dies, weil der Strahlengang dieses Spektrums relativ früh separiert wird und damit isoliert wird. Selbstverständlich ist es auch möglich, eine Rot-, bzw. Δλ₂-Standalone-Version oder eine Blau-, bzw. Δλ₁-Standalone-Version zu realisieren.

Im weiteren sind bezüglich des von der Beleuchtungsquelle auf die polarisationsselektive Teileranordnung 1 auftreffenden Lichtes folgende zwei Varianten möglich:
- ein Spektralbereich p-polarisiert, zwei s-polarisiert, wie bisher beschrieben, oder
- ein Spektralbereich s-polarisiert, zwei p-polarisiert.

Im weiteren sind folgende Varianten möglich:
- grün-Standalone, am spektralselektiven Teiler rot transmittiert, blau reflektiert, wie beschrieben,
- grün-Standalone, am spektralselektiven Teiler blau transmittiert, rot reflektiert,
- rot-Standalone, am spektralselektiven Teiler, grün transmittiert, blau reflektiert,
- rot-Standalone, am spektralselektiven Teiler blau transmittiert, grün reflektiert,
- blau-Standalone, am spektralselektiven Teiler rot transmittiert, grün reflektiert,
- blau-Standalone, am spektralselektiven Teiler grün transmittiert, rot reflektiert.

Im folgenden werden noch weitere Ausführungsformen der erfindungsgemässen Anordnung bzw. des erfindungsgemässen Verfahrens dargestellt.

Gemäss Fig. 9, worin dieselben Bezugszeichen für dieselben Elemente verwendet sind, wie sie anhand von Fig. 3 erläutert wurden, ist die spektralselektive Teileranordnung 16' als Glasplatte ausgebildet, ebenso der Ausgleichskörper 26'.

Die Ausführungsform, beispielsweise gemäss Fig. 3, aber auch gemäss beispielsweise Fig. 2, mit Vollkörpern hat vor allem den Vorteil, dass Lichteintrittsflächen in Substratmaterialien einfach senkrecht zur Lichteinfallsrichtung realisiert werden können und damit wenig Probleme mit Strahlenversatz und Astigmatismus auftreten. Dabei muss aber beachtet werden, dass das Design der spektralselektiven Teilerschichtsysteme in Vollkörpern schwieriger ist, da der Unterschied in der Polarisation grösser ist als an der in Fig. 9 dargestellten Platten-Version. Im weiteren muss in der Vollkörper-Version das Licht relativ lange Wege in Substratmaterial zurücklegen, womit sich auftretende Spannungsdoppelbrechungen stärker auswirken.

Im Falle des Plattenaufbaus gemäss Fig. 9 sollte beachtet werden, dass die optischen Weglängen für die drei Spektralanteile des Lichtes identisch sein müssen. Das heisst, es soll das spektralselektiv wirkende Schichtsystem an der Anordnung 16' sandwichartig zwischen zwei Glassubstraten gepackt sein, im "Standalone"-Pfad sollte eine analoge, geometrische Anordnung die Länge des optischen Weges anpassen.

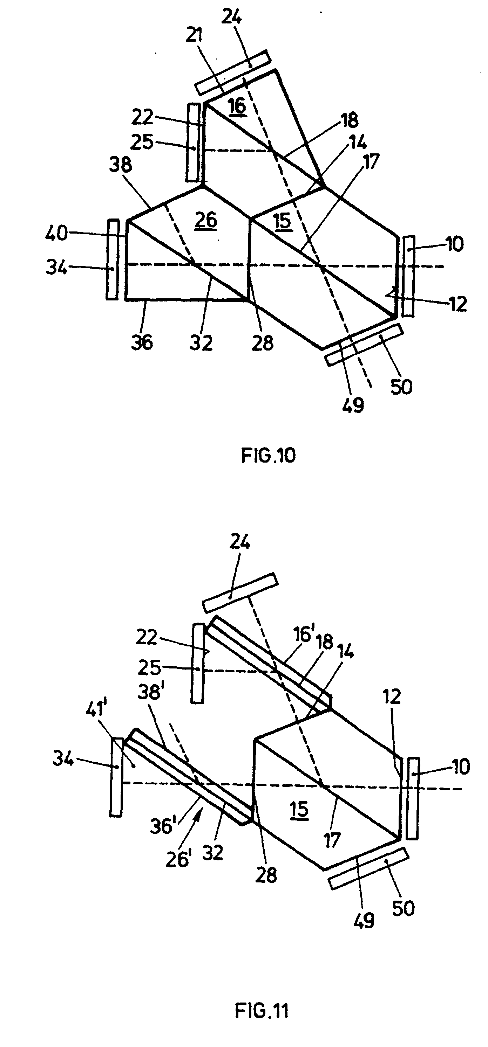

Fig. 10 zeigt eine Ausführungsform, bei der eine polarisationsselektive Teileranordnung 15 Winkeln eingesetzt wird, die von 45° abweichen. Dem Fachmann ist bekannt, dass polarisierende Teileranordnungen je nach verwendetem Typ bei unterschiedlichen Einfallswinkeln die optimale Wirksamkeit aufweisen. Beispiele, die bereits erwähnten MacNeille-Polarisatoren; polarisierende Strahlteiler, die oberhalb des kritischen Winkels arbeiten (siehe z.B. Li Li et al. "High-Efficiency LCD Projection Displays with Novel Thin-Film Polarizing Beam Splitters", SID 98 Digest, pp. 686-689, 1998); polarisierende Strahlteiler auf Flüssigkristallbasis (siehe z. B. K. Vinokur et al., "High-Contrast-Ratio Broad-Angle LC Polarizing Beamspliter", SID 98, Digest, pp. 690-693, 1998).

In Fig. 11 ist die erfindungsgemässe Anordnung gemäss Fig. 10 in "Platten-Bauweise" dargestellt. Es werden relativ aufwendige Massnahmen gegen den eingeführten Astigmatismus notwendig.

Einhergehend mit Einbussen im Kontrast, können im weiteren grundsätzlich die Reflexionswinkel an den polarisationsselektiven Teileranordnungen sowie den spektralselektiven unterschiedlich sein, müssen dabei nicht zwingend 45° betragen.

Das erfindungsgemässe Vorgehen kann durch Verwendung bezüglich Material und Herstellung relativ einfacher Bauteile realisiert werden, insbesondere bei (nicht zwingend) 45°-Basis.

Die im Rahmen der vorliegenden Erfindung bevorzugt eingesetzten spektralselektiven Polarisationsrotatoren 10 weisen eine sehr kleine Winkelabhängigkeit auf. Da die Abspaltung des ersten Spektralbereiches (insbesondere, wie detailliert erläutert wurde, des Grün-Bereiches) in Kombination mit einem weitgehendst wellenlängenneutralen Bauelement, nämlich dem vorzusehenden polarisationsselektiven Strahlteiler 17, erfolgt, ist eine äusserst kleine Winkelabhängigkeit in der spektralen Charakteristik zu erwarten. Dadurch werden kleine F-Zahlen, d.h. grosse Winkelbereiche, möglich ohne störende Farbeffekte am Rand und in Eckzonen der optisch wirksamen Bauelemente.

Insbesondere in der bevorzugten Grün-Standalone-Version kann das spektralselektiv aufteilende Schichtsystem derart gewählt werden, dass sich Polarisationsshift und Winkelshift weitestgehend nur im grünen Spektralbereich auswirken. Damit wird einerseits die Uebertragung des blauen und roten Lichtes unkritisch und es treten dort jedenfalls keine störenden Farbeffekte oder Verluste auf, andererseits kann der Standalone-Kanal, wie erläutert wurde, relativ einfach getrimmt werden.

In den bevorzugten Ausführungsformen trifft im weiteren das Licht lediglich auf zueinander parallel angeordnete Schichtsysteme auf. Dies hat den Vorteil, dass die eingangs erwähnte, bei Rosenbluth beschriebene "Compound angle Depolarisation", ohne weitere aufwendige Massnahmen äusserst klein gehalten werden kann. Es muss daher eine spezielle Phasenoptimierung der Dünnfilmschichtsysteme nicht vorgenommen werden, um optimal guten Kontrast zu erreichen.

Im weiteren kann der optische Weg, den das Licht nach Reflexion an den Lichtventilen in Substratmaterial zurücklegt, relativ kurz gehalten werden, womit Probleme aufgrund der Depolarisation durch Spannungsdoppelbrechung minimal ist.

In den bevorzugten 45°-basierten Ausführungsformen tritt im weiteren Licht, das durch Restreflexionen hervorgerufen wird und, wenn es in den Abbildungsstrahl A gelangt, den Kontrast negativ beeinflusst, im wesentlichen senkrecht auf die Austrittsflächen der Anordnung, wodurch es durch geeignete Massnahmen, (z.B. schwarze Flächen, die das Licht absorbieren können) einfacher zu eliminieren ist als in Anordnungen mit Winkeln ungleich 45°.

## Patentansprüche

1. Spektrale Lichtaufteil- und -Rekombinationsanordnung mit
• einer Eintrittsfläche (12) für aufzuteilendes Licht (L_{W})
• mindestens einer Austrittsfläche (49) für rekombiniertes Licht (A, B)
• einer spektralselektiven Aufteil/Rekombinations-Einrichtung (15, 16),
**dadurch gekennzeichnet, dass** die spektralselektive Aufteil/Rekombinations-Einrichtung (15, 16) eine polarisationsselektive Aufteil- und Rekombinations-Anordnung (15) umfasst, woran Licht eines Spektralbereiches (Δλ₃) von Licht anderer Spektralbereiche (Δλ₁, Δλ₂) abgetrennt bzw. Licht des genannten Spektralbereiches (Δλ₃) mit Licht der anderen Spektralbereiche (Δλ₁, Δλ₂) rekombiniert wird.

2. Anordnung nach Anspruch 1, **dadurch gekennzeichnet, dass** der Eintrittsfläche (12) erst die polarisationsselektive Aufteilund Rekombinations-Anordnung (1, 15) nachgeordnet ist, darnach mindestens eine spektralselektive Aufteil- und Rekombinations-Anordnung (5, 16).

3. Anordnung nach Anspruch 1 oder 2, **dadurch gekennzeichnet, dass** der polarisationsselektiven Aufteil- und Rekombinationsanordnung (1, 15) ein spektralselektiver erster Polarisationsrotator (10) vorgelagert ist.

4. Anordnung nach Anspruch 3, **dadurch gekennzeichnet, dass** dem spektralselektiven Polarisationsrotator (10) ein Breitbandpolarisator vorgelagert ist.

5. Anordnung nach einem der Ansprüche 1 - 4, **dadurch gekennzeichnet, dass** in Transmissionsrichtung (I), der polarisationsselektiven Aufteil- und Rekombinationsanordnung (1, 15) nachgelagert, ein Farbtrimmer (26) vorgesehen ist, vorzugsweise ausgebildet als polarisationsabhängiger, spektralselektiver Teiler.

6. Anordnung nach Anspruch 5, **dadurch gekennzeichnet, dass** dem Farbtrimmer (26) und der polarisationsselektiven Aufteil- und Rekombinationsanordnung (1, 15) ein zweiter Polarisationsrotator (30) zwischengelagert ist.

7. Anordnung nach einem der Ansprüche 1 - 6, **dadurch gekennzeichnet, dass** in Reflexionsrichtung (II), der polarisationsselektiven Aufteil- und Rekombinationsanordnung (1, 15) eine spektralselektive Aufteil- und Rekombinationsanordnung (5, 16) nachgelagert ist.

8. Anordnung nach einem der Ansprüche 1 - 7, **dadurch gekennzeichnet, dass** die polarisationsselektive Teileranordnung (15) ein vorzugsweise zur Eintrittsfläche (12) 45°-geneigtes Schichtsystem (17) umfasst.

9. Anordnung nach einem der Ansprüche 1 - 8, **dadurch gekennzeichnet, dass** in Reflexionsrichtung (II) der polarisationsselektiven Aufteil- und Rekombinationsanordnung (1, 15) eine spektralselektive Aufteil- und Rekombinationsanordnung (5, 16) nachgeordnet ist, und/oder der polarisationsselektiven Aufteil- und Rekombinationsanordnung (1, 15) in Transmissionsrichtung (I) eine weitere spektralselektive Teileranordnung (26) nachgeordnet ist, wobei die polarisationsselektive Aufteil- und Rekombinationsanordnung (1, 15) ein planes Schichtsystem (17) umfasst, ebenso die spektralselektive Aufteil- und Rekombinationsanordnung (5, 16) bzw. die weitere Strahlteileranordnung (26), wobei die Schichtsystemebenen (17, 18, 32) zueinander parallel sind.

10. Anordnung nach einem der Ansprüche 1 bis 9, **dadurch gekennzeichnet, dass** eine erste Austrittsfläche (49) für rekombiniertes Licht mindestens überwiegend einer Polarisierung sowie eine zweite Austrittsfläche (12) für rekombiniertes Licht einer anderen Polarisierung vorgesehen ist, wobei vorzugsweise eine dieser ersten und zweiten Austrittsflächen (49, 12) die Eintrittsfläche (12) ist.

11. Spektralselektive Lichtmodulationsanordnung mit einer Anordnung nach mindestens einem der Ansprüche 1 - 10, **dadurch gekennzeichnet, dass** der Aufteil- und Rekombinationseinrichtung (15, 16) in spektralselektiven Aufteilkanälen je eine in Reflexion arbeitende, gesteuerte Lichtventilanordnung (24, 25, 47) nachgeordnet ist.

12. Lichtmodulationsanordnung nach Anspruch 11, **dadurch gekennzeichnet, dass** der Eintrittsfläche (12) eine Weisslicht-Beleuchtungsquelle vorgeschaltet ist.

13. Lichtmodulationsanordnung nach einem der Ansprüche 11 oder 12, **dadurch gekennzeichnet, dass** der polarisationsselektiven Aufteil- und Rekombinationsanordnung (1, 15) eine Abbildungsoptik nachgelagert ist, bevorzugt ein spektralselektiver Polarisationsrotator (50) sowie, diesem nachgeschaltet, ein polarisationsselektives Filterelement (52).

14. Lichtmodulationsanordnung nach einem der Ansprüche 11 - 13, **dadurch gekennzeichnet, dass** die polarisationsselektive Aufteil- und Rekombinationsanordnung (15) im Querschnitt im wesentlichen polygon-, vorzugsweise rechteck-, weiter vorzugsweise quadratförmig ist, mit einem polarisationsselektiven Schichtsystem (17)in einer Fläche, die mindestens genähert in einer Diagonale der Querschnittsfigur liegt.

15. Verfahren zur spektralselektiven Modulation von Licht, bei dem:
• Licht in mindestens drei Spektralbereiche (Δλ₁, Δλ₂, Δλ₃) geteilt wird,
• Licht in den mindestens drei Spektralbereichen je an in Reflexion arbeitenden, je nach Ansteuerung die Polarisation des reflektierten Lichtes bezüglich des Einfallslichtes unverändernden bzw. um 90° drehenden, gesteuerten Lichtventilen (3a, 3b, 3c) moduliert wird,
• das reflektierte Licht der mindestens drei Spektralbereiche rekombiniert (A, B) wird,
**dadurch gekennzeichnet, dass** man Licht-eines der Spektralbereiche (Δλ₃) durch polarisationsselektive Aufteilung (1) abspaltet und, nach Reflexion an einem zugeordneten Lichtventil (3a) polarisationsselektiv mit dem reflektierten Licht der anderen Spektralbereiche (Δλ₁, Δλ₂) rekombiniert (1, A, B).

16. Verfahren nach Anspruch 15, **dadurch gekennzeichnet, dass** das Licht (L_{W}) mit den mindestens drei Spektralbereichen vorgängig einer spektralselektiven Polarisationsrotation (10) unterzogen wird.

17. Verfahren nach einem der Ansprüche 15 oder 16, **dadurch gekennzeichnet, dass** das Licht der mindestens drei Spektralbereiche (L_{W}) einer ersten Aufteilung durch die polarisationsselektive Aufteilung (1) unterworfen wird.

18. Verfahren nach einem der Ansprüche 15 bis 17, **dadurch gekennzeichnet, dass** das Licht mit den mindestens drei Spektralbereichen weisses Licht ist und das durch polarisationsselektive Aufteilung abgespaltete Licht und rekombinierte Licht grünes Licht (Δλ_{G}) ist.

19. Verfahren nach einem der Ansprüche 15 - 18, **dadurch gekennzeichnet, dass** eine weitere Aufteilung und Rekombination spektralselektiv (5) vorgenommen wird.

20. Verfahren nach einem der Ansprüche 15 - 19, **dadurch gekennzeichnet, dass** der Pfad des Lichtes hin zu den Lichtventilen (3a - 3c) und der Pfad des daran reflektierten Lichtes zurück identisch ist, bis hin zur polarisationsselektiven Rekombination (1), wo das reflektierte Licht aller Spektren polarisationsselektiv (A, B) geteilt wird.

21. Verfahren nach einem der Ansprüche 15 - 20, **dadurch gekennzeichnet, dass** die polarisationsselektive Aufteilung (1) 45°-Winkel bzw. 90°-strahlumlenkung (I, II) umfasst.

22. Verfahren nach Anspruch 19, **dadurch gekennzeichnet, dass** die spektralselektive Aufteilung (5) 45°-Winkel bzw. 90°-Strahlumlenkung (II, IV) umfasst.

23. Verfahren nach einem der Ansprüche 15 - 22, **dadurch gekennzeichnet, dass** Licht mindestens eines der Spektralbereiche, bevorzugt des durch polarisationsselektive Aufteilung abgespalteten (Δλ₃), zwischen dem polarisationsselektiven Aufteilen (1) und Rekombinieren (15) einer Farbtrimmung (26) unterworfen wird, bei der unerwünschte Spektralbereiche ausgeblendet (38, 36) werden.

24. Verfahren nach Anspruch 23, **dadurch gekennzeichnet, dass** die Farbtrimmung (26) durch polarisationsabhängige, spektralselektive Abtrennung vorgenommen wird.

25. Verfahren nach einem der Ansprüche 23 oder 24, **dadurch gekennzeichnet, dass** man vor der Farbtrimmung von Licht eines Spektralbereiches (Δλ₃) daran eine bestimmte Polarisationsänderung vornimmt (30).

26. Verfahren nach einem der Ansprüche 15 bis 25, **dadurch gekennzeichnet, dass** man nach Rekombination (1) des Lichtes der vorgesehenen Spektralbereiche dieses einer spektralselektiven Polarisationsänderung (50) unterzieht und anschliessend einer polarisationsselektiven Filterung (52).

27. Verfahren nach einem der Ansprüche 15 - 26, **dadurch gekennzeichnet, dass** man die optischen Weglängen der Spektralanteile ab erster Aufteilung bis zur letzten Rekombination mindestens genähert gleich auslegt.

28. Verwendung des Verfahrens nach einem der Ansprüche 15 - 27 bzw. der Anordnung nach einem der Ansprüche 1 - 14 für die Projektion von Bildern durch spektralselektive, flächige Modulation von Weisslichtspektren.

## Claims

1. Spectral light division and recombination arrangement with
• an incident face (12) for light (L_{W}) to be divided
• at least one emergent face (49) for recombined light (A, B)
• a spectrally selective division/recombination device (15, 16),
**characterised in that** the spectrally selective division/recombination device (15, 16) comprises a polarisation-selective division and recombination arrangement (15) on which light of a spectral range (Δλ₃) is separated from light of other spectral ranges (Δλ₁, Δλ₂) or light of the said spectral range (Δλ₃) is recombined with light of the other spectral ranges (Δλ₁, Δλ₂).

2. Arrangement according to claim 1, **characterised in that** after the incident face (12) is arranged first the polarisation-selective division and recombination arrangement (1, 15) and then at least one spectrally selective division and recombination arrangement (5, 16).

3. Arrangement according to claim 1 or 2, **characterised in that** before the polarisation-selective division and recombination arrangement (1, 15) is placed a spectrally selective first polarisation rotator (10).

4. Arrangement according to claim 3, **characterised in that** before the spectrally selective polarisation rotator (10) is placed a broad-band polariser.

5. Arrangement according to any of claims 1 - 4, **characterised in that** in the transmission direction (I), after the polarisation-selective division and recombination arrangement (1, 15) is provided a colour trimmer (26) preferably formed as a polarisation-dependant spectrally selective splitter.

6. Arrangement according to claim 5, **characterised in that** placed between the colour trimmer (26) and the polarisation-selective division and recombination arrangement (1, 15) is a second polarisation rotator (30).

7. Arrangement according to any of claims 1 - 6, **characterised in that** in the reflection direction (II), after the polarisation-selective division and recombination arrangement (1, 15) is placed a spectrally selective division and recombination arrangement (5, 16).

8. Arrangement according to any of claims 1 - 7, **characterised in that** the polarisation-selective splitter arrangement (15) comprises a layer system (17) preferably inclined at 45° to the incident face (12).

9. Arrangement according to any of claims 1 - 8, **characterised in that** in the reflection direction (II), after the polarisation-selective division and recombination arrangement (1, 15) is placed a spectrally selective division and recombination arrangement (5, 16) and/or in the transmission direction (I), after the polarisation-selective division and recombination arrangement (1, 15) is placed a further spectrally selective splitter arrangement (26), where the polarisation-selective division and recombination arrangement (1, 15) comprises a planar layer system (17) as well as the spectrally selective division and recombination arrangement (5, 16) or the further beam splitter arrangement (26), where the layer system planes (17, 18, 32) are parallel to each other.

10. Arrangement according to any of claims 1 to 9, **characterised in that** a first emergent face (49) for recombined light of at least primarily one polarisation and a second emergent face (12) for recombined light of a different polarisation are provided, where preferably one of these first and second emergent faces (49, 12) is the incident face (12).

11. Spectrally selective light modulation arrangement with an arrangement according to at least one of claims 1 - 10, **characterised in that** after the division and recombination device (15, 16) in spectrally selective division channels respectively is placed a controlled light valve arrangement (24, 25 47) operating in reflection.

12. Light modulation arrangement according to claim 11, **characterised in that** before the incident face (12) is provided a white light illumination source.

13. Light modulation arrangement according to one of claims 11 or 12, **characterised in that** after the polarisation-selective division and recombination arrangement (1, 15) is placed an imaging lens system, preferably a spectrally selective polarisation rotator (50), and after this a polarisation-selective filter element (52).

14. Light modulation arrangement according to one of claims 11 - 13, **characterised in that** the polarisation-selective division and recombination arrangement (15) is essentially polygonal, preferably rectangular, further preferably square in cross section, with a polarisation-selective layer system (17) in one face which lies at least approximately in a diagonal of the cross-section figure.

15. Process for the spectrally selective modulation of light in which:
• light is divided into at least three spectral ranges (Δλ₁, Δλ₂, Δλ₃)
• light in the at least three spectral ranges is modulated on controlled light valves (3a, 3b, 3c) operating in reflection and, depending on triggering not changing the polarisation of the reflected light or rotating this by 90° in relation to the incident light,
• the reflected light of the at least three spectral ranges is recombined (A, B),
**characterised in that** light of one of the spectral ranges (Δλ₃) is split away by polarisation-selective division (1) and, after reflection on an associated light valve (3a), is polarisation-selectively recombined (1, A, B) with the reflected light of the other spectral ranges (Δλ₁, Δλ₂).

16. Process according to claim 15, **characterised in that** the light (L_{W}) with the at least three spectral ranges is first subjected to a spectrally selective polarisation rotation (10).

17. Process according to one of claims 15 or 16, **characterised in that** the light of the at least three spectral ranges (L_{W}) is subjected to a first division by the polarisation-selective division (1).

18. Process according to one of claims 15 to 17, **characterised in that** the light with the at least three spectral ranges is white light and the light split away by polarisation-selective division and the recombined light is green light (Δλ_{G}).

19. Process according to any of claims 15 - 18, **characterised in that** a further division and recombination is carried out spectrally selective (5).

20. Process according to any of claims 15 - 19, **characterised in that** the path of the light to the light valves (3a - 3c) and the return path of the light reflected thereon are identical up to the polarisation-selective recombination (1) where the reflected light of all spectra is polarisation-selectively (A, B) divided.

21. Process according to any of claims 15 - 20, **characterised in that** the polarisation-selective division (1) comprises beam deflections (I, II) by angles of 45° or 90°.

22. Process according to claim 19, **characterised in that** the spectrally selective division (5) comprises beam deflections (III, IV) by angles of 45° or 90°.

23. Process according to any of claims 15 - 22, **characterised in that** light of at least one of the spectral ranges, preferably that (Δλ₃) split away by polarisation-selective division, is subjected, between the polarisation-selective division (1) and recombination (15), to a colour trimming (26) in which the undesired spectral ranges are faded out (38, 36).

24. Process according to claim 23, **characterised in that** the colour trimming (26) is carried out by polarisation-dependent, spectrally selective separation.

25. Process as claimed in one of claims 23 or 24, **characterised in that** before the colour trimming of light of one spectral range (Δλ₃) a specific polarisation change is performed thereon.

26. Process according to any of claims 15 to 25, **characterised in that** after recombination (1) of the light of the provided spectral ranges, this is subjected to a spectrally selective polarisation change (50) and subsequently to a polarisation-selective filtration (52).

27. Process according to any of claims 15 - 26, **characterised in that** the optical path lengths of the spectral components from the first division to the last recombination are laid at least approximately equal.

28. Use of the process according to any of claims 15 - 27 or the arrangement according to any of claims 1 - 14 for the projection of images through spectrally selective, broad surface modulation of white light spectra.

## Revendications

1. Montage de répartition et de recombinaison spectrales de la lumière avec
• une surface d'entrée (12) pour la lumière à répartir (L_{W})
• au moins une surface de sortie (49) pour la lumière recombinée (A, B)
• un dispositif de répartition/recombinaison à sélectivité spectrale (15, 16),
**caractérisé en ce que** le dispositif de répartition/recombinaison à sélectivité spectrale (15, 16) comprend un montage de répartition et de recombinaison (15) sélectif à la polarisation, dans lequel la lumière d'un domaine du spectre (Δλ₃) est séparée de la lumière d'autres domaines spectraux (Δλ₁, Δλ₂) ou la lumière du domaine de spectre cité (Δλ₃) est recombinée avec la lumière des autres domaines spectraux (Δλ₁, Δλ₂).

2. Montage selon la revendication 1, **caractérisé en ce que**, après la surface d'entrée (12), sont disposés d'abord le montage de répartition et de recombinaison (1, 15) sélectif à la polarisation, puis au moins un montage de répartition et de recombinaison (1, 15) à sélectivité spectrale (5, 16).

3. Montage selon la revendication 1 ou 2, **caractérisé en ce qu'**un premier rotateur de polarisation (10) est monté avant le montage de répartition et de recombinaison (1, 15) sélectif à la polarisation.

4. Montage selon la revendication 3, **caractérisé en ce qu'**un polariseur à large bande est monté avant le rotateur de polarisation à sélectivité spectrale (10).

5. Montage selon l'une des revendications 1 à 4, **caractérisé en ce qu'**il est prévu un compensateur de couleur (26), conçu de préférence comme un diviseur dépendant de la polarisation, sélectif du spectre, monté après le montage de répartition et de recombinaison sélectif à la polarisation (1, 15) dans la direction de transmission (I).

6. Montage selon la revendication 5, **caractérisé en ce qu'**un deuxième rotateur de polarisation (30) est monté entre le compensateur de couleur (26) et le montage de répartition et de recombinaison (1, 15) sélectif à la polarisation.

7. Montage selon l'une des revendications 1 à 6, **caractérisé en ce qu'**un montage de répartition et de recombinaison à sélectivité spectrale (5, 16) est monté après le montage de répartition et de recombinaison (1, 15) sélectif à la polarisation dans la direction de la réflexion (II).

8. Montage selon l'une des revendications 1 à 7, **caractérisé en ce que** le montage de répartition (15) sélectif à la polarisation comprend un système de couches (17), de préférence incliné de 45° par rapport à la surface d'entrée (12).

9. Montage selon l'une des revendications 1 à 8, **caractérisé en ce qu'**un montage de répartition et de recombinaison à sélectivité spectrale (5, 16) est disposé après le montage de répartition et de recombinaison (1, 15) sélectif à la polarisation dans la direction de la réflexion (II), et/ou un autre montage de répartition à sélectivité spectrale (26) est disposé après le montage de répartition et de recombinaison (1, 15) sélectif à la polarisation dans la direction de la transmission (I), le montage de répartition et de recombinaison (1, 15) sélectif à la polarisation comprenant un système plan de couches (17), de même que le montage de répartition et de recombinaison à sélectivité spectrale (5, 16) ou l'autre montage de répartition de faisceau (26), les plans du système de couches (17, 18, 32) étant parallèles les uns aux autres.

10. Montage selon l'une des revendications 1 à 9, **caractérisé en ce qu'**il est prévu une première surface de sortie (49) de lumière recombinée d'au moins essentiellement une polarisation, ainsi qu'une deuxième surface de sortie (12) de lumière recombinée d'une autre polarisation, l'une de ces première et deuxième surfaces de sortie (49, 12) étant de préférence la surface d'entrée (12).

11. Montage de modulation de lumière à sélectivité spectrale avec un montage selon au moins l'une des revendications 1 à 10, **caractérisé en ce qu'**un montage de valves optiques (24, 25, 47) commandé, fonctionnant en réflexion, est disposé après le dispositif de répartition et de recombinaison (15, 16) dans des canaux de répartition sélectifs de spectre.

12. Montage de modulation de la lumière selon la revendication 11, **caractérisé en ce qu'**une source d'éclairage en lumière blanche est montée avant la surface d'entrée (12).

13. Montage de modulation de la lumière selon l'une des revendications 11 ou 12, **caractérisé en ce qu'**une optique de reproduction, de préférence un rotateur de polarisation à sélectivité spectrale (50), ainsi que, monté après celui-ci, un élément de filtre (52) sélectif à la polarisation, est monté après le montage de répartition et de recombinaison (1, 15) sélectif à la polarisation.

14. Montage de modulation de la lumière selon l'une des revendications 11 à 13, **caractérisé en ce que** le montage de répartition et de recombinaison (15) sélectif à la polarisation a une section de forme essentiellement polygonale, de manière préférentielle rectangulaire, encore plus préférentielle carrée, avec un système de couches (17) sélectif à la polarisation dans une surface qui est située, au moins de manière approchée, dans une diagonale de la figure de la section.

15. Procédé pour la modulation sélective de spectre de la lumière, dans lequel :
• la lumière est divisée en trois domaines spectraux (Δλ₁, Δλ₂, Δλ₃) au moins,
• la lumière de chacun de ces trois domaines spectraux est modulée par des valves de lumière commandées (3a, 3b, 3c), travaillant en réflexion, et qui, selon leur commande, ne modifient pas la polarisation de la lumière réfléchie par rapport à la lumière incidente, ou la tournent de 90°
• la lumière réfléchie des trois domaines spectraux au moins est recombinée (A, B),
**caractérisé en ce qu'**on sépare la lumière d'un des domaines spectraux (Δλ₃) par répartition sélective de polarisation (1) et, après réflexion sur une valve optique associée (3a), on la recombine (1, A, B) de manière sélective de polarisation avec la lumière réfléchie des autres domaines spectraux (Δλ₁, Δλ₂).

16. Procédé selon la revendication 15, **caractérisé en ce que** la lumière (L_{w}) avec les trois domaines spectraux au moins est soumise préalablement à une rotation de polarisation (10) sélective de spectre.

17. Procédé selon l'une des revendications 15 ou 16, **caractérisé en ce que** la lumière des trois domaines spectraux (L_{w}) au moins est soumise à une première répartition par la répartition sélective de polarisation (1).

18. Procédé selon l'une des revendications 15 à 17, **caractérisé en ce que** la lumière avec les trois domaines spectraux au moins est de la lumière blanche et la lumière dissociée par répartition sélective de polarisation et la lumière recombinée sont de la lumière verte (Δλ_{G}).

19. Procédé selon l'une des revendications 15 à 18, **caractérisé en ce qu'**une autre répartition et recombinaison est effectuée de manière sélective de spectre (5).

20. Procédé selon l'une des revendications 15 à 19, **caractérisé en ce que** le chemin aller de la lumière vers les valves optiques (3a à 3c) et le chemin retour de la lumière qui y est réfléchie sont identiques, jusqu'à la recombinaison sélective de polarisation (1), où la lumière réfléchie de tous les spectres est divisée de manière sélective de polarisation (A, B).

21. Procédé selon l'une des revendications 15 à 20, **caractérisé en ce que** la répartition sélective de polarisation (1) comprend une déviation du faisceau correspondant à un angle de 45 ou de 90° (I, II).

22. Procédé selon la revendication 19, **caractérisé en ce que** la répartition sélective du spectre (5) comprend une déviation du faisceau de correspondant à un angle de 45 ou 90° (II, IV).

23. Procédé selon l'une des revendications 15 à 22, **caractérisé en ce que** la lumière d'au moins un des domaines spectraux, de préférence de celui qui est dissocié par répartition sélective de polarisation (Δλ₃), est soumise, entre la répartition (1) et la recombinaison (15) sélective de polarisation, à une sélection de couleur (26) dans laquelle des domaines spectraux non désirés sont enferrés (38, 36).

24. Procédé selon la revendication 23, **caractérisé en ce que** la compensation de couleur (26) est effectuée par séparation sélective de spectre dépendant de la polarisation.

25. Procédé selon l'une des revendications 23 ou 24, **caractérisé en ce qu'**on procède, avant la compensation de couleur de la lumière d'un domaine de spectre (Δλ₃), à une certaine variation de polarisation (30).

26. Procédé selon l'une des revendications 15 à 25, **caractérisé en ce que**, après recombinaison (1) de la lumière des domaines spectraux prévus, on soumet celle-ci à une modification de polarisation sélective de spectre (50) et ensuite à une filtration sélective de polarisation (52).

27. Procédé selon l'une des revendications 15 à 26, **caractérisé en ce que** les chemins optiques des fractions de spectre à partir de la première répartition jusqu'à la dernière recombinaison sont conçues pour être égales, au moins de manière approchée.

28. Utilisation du procédé selon l'une des revendications 15 à 27 ou du montage selon l'une des revendications 1 à 14 pour la projection d'images par modulation, plane et sélective de spectre, de spectres de lumière blanche.
